# EUROPEAN PATENT SPECIFICATION

(11) **EP 3 019 410 B1**
(45) Date of publication and mention of the grant of the patent: **25.12.2019**
(21) Application number: 14822367.0
(22) Date of filing: 08.07.2014
(51) Int. Cl.: B65D 30/22, B65D 81/00, A23L 3/00, B65D 85/804, A47J 47/02, B65D 81/26, B65D 85/816

(54) **USE OF A BAG FOR STORING, PRESERVING, AND STEEPING AND/OR SOFTENING OF FOOD PRODUCTS**
VERWENDUNG EINER TASCHE ZUR AUFBEWAHRUNG, KONSERVIERUNG SOWIE EINWEICHEN UND/ODER WEICHMACHUNG VON NAHRUNGSMITTELN
UTILISATION D'UN SAC PERMETTANT DE STOCKER, DE CONSERVER, ET DE FAIRE MACÉRER ET/OU RAMOLLIR DES DENRÉES ALIMENTAIRES

(30) Priority: 08.07.2013 NO 20130948
(43) Date of publication of application: 18.05.2016
(73) Proprietor: Market Development AS, 6057 Ellingsøy (NO)
(72) Inventor: AARSETH, Arnt Olav, N-6057 Ellingsøy (NO)
(74) Representative: Zacco Norway AS
(86) International application number: PCT/NO2014/050125
(87) International publication number: WO 2015/005798

(56) References cited:
- EP-A1- 0 778 202
- EP-A1- 1 106 529
- EP-A1- 1 245 504
- EP-A1- 2 353 397
- EP-A2- 0 179 641
- WO-A1-2005/105604
- WO-A1-2007/025541
- DE-B3-102006 039 566
- JP-A- 2003 339 309
- JP-A- 2008 285 190

## Description

The present invention relates to the use of a bag for storing, preserving, and steeping and/or softening of food products.

Salting and drying have been used as preservation methods for food products for a very long time. These preservation methods are still used extensively. This applies to food products, such as *e.g.* meat, fish, fruit, and vegetables. These preservation methods have also left their mark on local cooking methods and traditional dishes; *i.e.* the preservation methods are not only relevant with regard to preservation, but also to taste and texture. The preservation methods contribute to taste changes, maturation processes, and texture changes. Examples of food products which are characterized by their preservation method are: clipfish, salted meat, cured meat, dried peas, etc.

Many of the food products processed by the above (and other) preservation methods must be steeped and/or soaked before you can eat them. For example, clipfish must usually be steeped in order for it not to be too salty, while at the same time it should be softened to get the right texture.

Typically, dried peas just need soaking before use, while other food products need steeping in order to water down the preservative with which they have been treated (salt, nitrate, vinegar, sugar, etc.).

Knowledge of steeping of clipfish, with steeping time, temperature, steeping volume, and changing of water, might be inadequate, and today's consumer finds it arduous. The recent change in cooking habits, internationalization of eating habits, and the large supply of ready meals, have to some extent affected the knowledge of and interest in the traditional kitchen. This has also contributed to changing these traditional food products, as both producer and end user take "shortcuts" in order to shorten the time consumption, reduce the need for knowledge, and ease the process.

The end user often ends up steeping the food product too little (e.g. of salt) or too much (for example tame taste and limp texture). Incorrect changing of water (too much or too little) often adversely affects the final result.

Common solutions are various forms of "convenience food" or semi-manufactured food where the food producers deliver finish-steeped and/or soaked products. One of the problems with such products is durability. Steeped/soaked products have a very short shelf life, even under good cooling conditions. The solution to this is again that manufacturers freeze the finish-steeped/soaked food products. This is both time-consuming and resource-demanding for the manufacturer, presenting new challenges with respect to a new cold-chain (frost), particularly with regard to the quality reduction or the damage that the food products may be subject to in case of stoppage in the cooling/freezing installations they are to pass through (production, storage, transportation, retail outlet, etc.). It may also be precarious from an energy point of view. Furthermore, the quality of the frozen goods will often be different. The product itself is not necessarily inferior, but in most cases the product will be somewhat or significantly different from what was traditionally normal, or from what is expected in a traditional dish.

To steep and/or soften food products that have been preserved in one of the above ways normally requires knowledge, equipment, and time. In addition, there are challenges related to hygiene, possible changing of water, food safety, space, mess, smell, and washing. The finished food product should also meet the expectations and requirements that it is going to be as it should.

DE102006039566 discloses a plastic draining container for holding foodstuffs placed in liquid which is divided into two equally large chambers by a partition that has apertures for the admission of liquids so that the liquid collects in the first and second chamber depending on the position of the container.

WO2007/025541 discloses a filtering cup and methods of using such filtering cup.

EP1245504 discloses a bag with two compartments for steaming food products .

EP0778202 discloses an aseptic bag for separating off liquid.

EP1106529 discloses a bag for storing and rinsing a product.

The present invention solves at least one of the above disadvantages by the use of a bag as set forth in the appended independent use claim 1.

The dependent claim 2 sets forth an advantageous embodiment.

The following is a detailed description of the present invention with reference to the accompanying drawings, in which:
Figure 1 shows an embodiment comprising an inner bag, (not belonging to the invention) and
Figure 2 shows an embodiment comprising a partition secured to the inside of the bag, (not belonging to the invention).

The invention is set out in the appended set of claims.

The present invention discloses the use of a bag (1) for storing, preserving, soaking and softening of a food product, especially clipfish, where the bag (1) is divided into at least a first (2,7) and a second section (3, 8), wherein a partition (5, 6) is separating the first and the second sections (2,7,3,8), the partition (5,6) comprising a number of holes arranged to let through salt or other chemicals, and the bag (1) comprising a closing mechanism (4), wherein the volume of the bag (1) is adapted to the food product and its amount, where a water volume of the bag (1) is matched to the food product and its amount in order to achieve correct steeping and softening, where the water volumen, temperature, and minimum time for steeping and softening are specified on the bag (1) or other packaging and that:
- the food product is passed into the first section (2,7),
- the closing mechanism (4) is closed,
- the bag 1 is bent, folded or rolled up,
- the closing mechanism (4) is opened,
- the bag (1) is filled up with water,
- the closing mechanism (4) is closed,
- the bag (1) is stored with the food product at the specified temperature,
- the bag (1) is stored until the specified minimum time has been reached.
The inner bag 2 is wholly or partially provided with holes or a membrane 5 which let through water and the remnants of the substance to be watered down. Both the inner and the outer bag 2 and 1, respectively, comprise suitable closing mechanisms 4.

According to the present invention, the packaging 1 also functions as a steeping bag.

According to one embodiment (not belonging to the invention) the closing mechanism 4 is essentially waterproof. The closing mechanism 4 may also interact in such a way that both the inner and the outer bag 2 and 1, respectively, are opened and closed simultaneously.

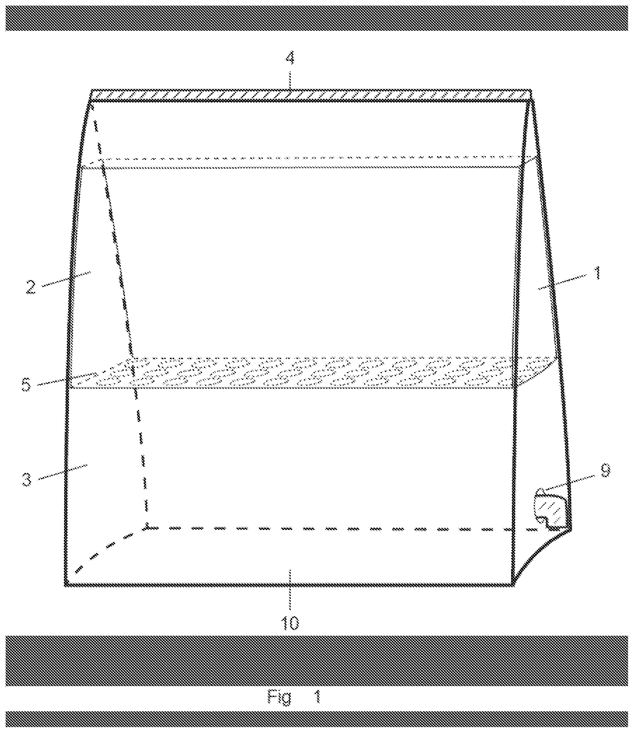

According to another embodiment (not belonging to the invention) the inner bag 2 is attached or mounted in a suitable manner and at a suitable place in the outer bag 1. For example, the inner bag 2 may be secured to the outer bag 1 by means of a plastic weld (not shown). The inner bag 2 may be secured, for example, to the outer bag 1 such that the openings of the inner bag 2 and the outer bag 1 coincide (as shown in Fig. 1).

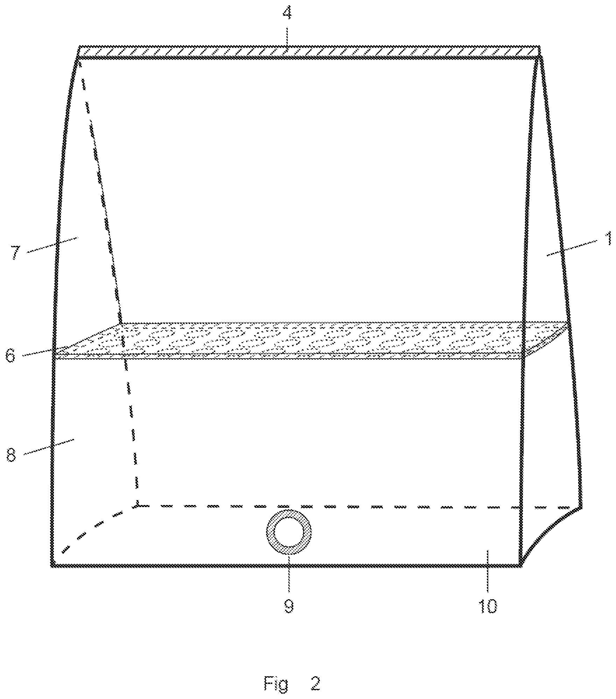

According to an alternative embodiment (not belonging to the invention) no inner bag 2 is used on the inside of the outer bag 1. Instead, there is provided a partition 6, as shown in Fig. 2. This partition 6 may have the same design and/or function as the small holes or the membrane 5 described in connection with the embodiment shown in Fig. 1. The partition 6 can be attached in a suitable and conventional manner. The partition 6 forms two (or more) chambers or sections 7 and 8, respectively, where section 7 corresponds to the inner bag 2, and section 8 corresponds to the residual space in the outer bag 1.

The membrane 5 can function as a kind of one-way valve, which lets through the salt, or any other chemicals, in one direction, but not in the other. In this way, the packaging/steeping bag 1 will not be strictly dependent on it being upright in the correct position during the actual steeping.

According to the present invention, the volume of the outer bag or packaging 1 is specifically matched to the food product to be stored. After the food product (not shown) has been finish-preserved and pretreated, the food product is passed into the inner bag 2, alternatively into the section 7. Then, the closing mechanism 4 or another outer closing mechanism (not shown) is closed, and the bag 1 is bent, folded or rolled up, possibly in a manner wanted by the manufacturer/distributor/seller, preferably such that the total product appears in a savoury, fine, or practical manner.

When the food product has reached the end user/consumer and is to be steeped and/or softened prior to the final preparation, the outer bag or the packaging 1 is filled with water. The end user/consumer need not decide on the quantity of water, changing, draining etc. The outer bag or the packaging 1 is filled up with water, the closing mechanism 4 is closed, and the device containing food product and the right quantity of water is stored in a suitable place, for example in a fridge, larder, or the like. As the volume of the outer bag or the packaging 1 is matched precisely to the food product to be steeped and/or softened, the food product now has to stand only for a specified minimum time within a given temperature range. It will not impair or adversely affect the food product if it is steeped and/or softened for longer than the estimated and specified minimum time (this applies, of course, within reasonable limits, but is limited upwardly only by the durability of the steeped/softened food product at the storage temperature, which may be many days or weeks).

Thus, the end user/consumer has to relate only to the minimum time that the food product must be steeped and/or softened. If the end user/consumer is to prepare and serve a specific dish on Saturday afternoon, and the packaging says that the food product must be steeped and/or softened for at least one day, it does not matter whether water is filled into the bag one or four days before, *i.e.* Friday or Tuesday. The result and the quality are the same, the food product is not steeped too much so that it loses flavour. In comparison to all other ways of steeping and/or softening such food products, this is much easier for the end user/consumer, in addition to it giving a significantly better and predictable result.

A practical example of the above is steeping of fully salted clipfish. The time it takes for fully salted clipfish to reach optimal salt concentration by steeping has been established. How much salt is ideal in the steeped fish will depend on how the steeped fish is to be cooked. If the fish is to be grilled, baked, or fried, it is recommended that the salt content be somewhat lower than for fish to be boiled or steamed. For example, optimal salt concentration (for example 2.5 g/100 g fish) in loins is obtainable after 54-60 hours in the fridge, and 36-40 hours at room temperature. For smaller cuts of loins, belly portions, and tail portions it takes 20-24 hours on steeping in the fridge, and 16-20 hours on steeping at room temperature. If steeping takes place at room temperature, the fish should be prepared the same day. If it is steeped in the fridge, it can be stored for up to four days in the fridge before cooking. If the fish is steeped in the fridge, there is a minimum time to get down to the optimal salt concentration, while the maximum time is determined by the amount of bacteria etc.

Thus, according to the present invention, the bag 1 is constructed such that the consumer can easily and without prior knowledge soak/steep the product by only adding water.

The present invention contributes to food safety in that the food product does not need to leave the packaging before it goes into the pot. The food product can be packaged, stored, transported, steeped, frozen etc. in the same packaging without being handled by or on potentially unclean fingers, tools, or surfaces. The end user/consumer does not have to think about changing of water, quantity of water; there will be no muddle, mess, washing-up, or odour; perfect steeping is achieved; and everyone is able to use the product.

When the steeping/softening of the food product is complete, the water must be discharged. The bag 1 is designed such that it stands upright by itself. The partition 6 and/or the inner bag 2 is/are designed such that the food product does not sink to the bottom 10 of the outer bag 1, but is held at a given distance above the bottom 10 of the bag 1. This is advantageous because for example salt/salt water will sink to the bottom of the bag due to its high density relative to water. Thus, the food product will be kept away from this region with high concentration of chemical which it is desired to steep.

If the food product is preserved with a chemical which is lighter than water, then the situation is reversed. In the latter case, the food product can be placed in the lower section 8, or optionally the inner bag 2 is placed at the bottom of the outer bag 1.

The bag 1 may be provided with draining means 9, a weakening zone 9', which makes it easy to tear open the bag, and/or optionally comprise a line or marking indicating where it is advantageous to cut the bag 1 (not shown).

The bag 1 may be arranged such that it can stand by itself while and after the bag is being emptied/has been emptied of water. Alternatively, the bag can be fitted with a hook or a hole (not shown), which makes it easy to mount the bag on a faucet or the like.

## Claims

1. Use of a bag (1) for storing, preserving, soaking and softening of a food product, especially clipfish, where the bag (1) is divided into at least a first (2, 7) and a second section (3; 8), wherein a partition (5; 6) is separating the first and the second sections (2, 7; 3, 8), the partition (5; 6) comprising a number of holes arranged to let through salt or other chemicals, and the bag (1) comprising a closing mechanism (4),
**characterized in that** the volume of the bag (1) is adapted to the food product and its amount, where a water volume of the bag (1) is matched to the food product and its amount in order to achieve correct steeping and softening, where the water volume, temperature, and minimum time for steeping and softening are specified on the bag (1) or other packaging, and that;
- the food product is passed into the first section (2, 7),
- the closing mechanism (4) is closed,
- the bag 1 is bent, folded or rolled up,
- the closing mechanism (4) is opened,
- the bag (1) is filled up with water,
- the closing mechanism (4) is closed,
- the bag (1) is stored with the food product at the specified temperature
- the bag (1) is stored until the specified minimum time has been reached.

2. Use of a bag (1) according to claim 1, where a maximum time for soaking and softening on the basis of the expiry of the food product is specified on the bag (1) or other packaging.

## Patentansprüche

1. Verwendung einer Tasche (1) zur Aufbewahrung, Konservierung, zum Einweichen und Weichmachen eines Nahrungsmittelprodukts, insbesondere Klippfisch, wobei die Tasche (1) in mindestens einen ersten (2, 7) und einen zweiten Abschnitt (3; 8) eingeteilt ist, wobei eine Trennwand (5; 6) den ersten und den zweiten Abschnitt (2, 7; 3, 8) trennt, wobei die Trennwand (5; 6) eine Anzahl von Löchern umfasst, die dazu vorgesehen sind, Salz oder andere Chemikalien durchzulassen, und die Tasche (1) einen Schließmechanismus (4) umfasst,
**dadurch gekennzeichnet, dass** das Volumen der Tasche (1) an das Nahrungsmittelprodukt und seine Menge angepasst ist, wobei ein Wasservolumen der Tasche (1) auf das Nahrungsmittelprodukt und seine Menge abgestimmt ist, um ein korrektes Einweichen und Weichmachen zu erreichen, wobei das Wasservolumen, die Temperatur und Minimalzeit für das Einweichen und Weichmachen auf der Tasche (1) oder einer anderen Verpackung spezifiziert sind, und dass;
- das Nahrungsmittelprodukt in den ersten Abschnitt (2, 7) eingeleitet wird,
- der Schließmechanismus (4) geschlossen wird,
- die Tasche 1 umgebogen, gefaltet oder aufgerollt wird,
- der Schließmechanismus (4) geöffnet wird,
- die Tasche (1) mit Wasser gefüllt wird,
- der Schließmechanismus (4) geschlossen wird,
- die Tasche (1) mit dem Nahrungsmittelprodukt bei der spezifizierten Temperatur aufbewahrt wird
- die Tasche (1) bis das Erreichen der spezifizierten Minimalzeit aufbewahrt wird.

2. Verwendung einer Tasche (1) nach Anspruch 1, wobei eine Maximalzeit für das Einweichen und Weichmachen auf der Basis des Ablaufs des Nahrungsmittelprodukts auf der Tasche (1) oder einer anderen Verpackung spezifiziert ist.

## Revendications

1. Utilisation d'un sac (1) permettant de stocker, de conserver de tremper et de ramollir des denrées alimentaires en particulier les morues salées, le sac (1) étant divisé en au moins une première (2, 7) et une deuxième section (3; 8), une cloison (5; 6) séparant les première et deuxième sections (2, 7; 3, 8), la cloison (5; 6) comprenant plusieurs trous agencés pour laisser passer du sel et d'autres produits chimiques, et le sac (1) comprenant un mécanisme de fermeture (4),
**caractérisée en ce que** le volume du sac (1) est adapté à la denrée alimentaire et son quantité, un volume d'eau du sac (1) est adapté à la denrée alimentaire et son quantité afin d'obtenir la bonne dessalaison et le bon ramollissement, le volume d'eau, la température et le temps minimum pour la dessalaison et le ramollissement sont spécifiés sur le sac (1) ou un autre emballage, et **en ce que** ;
- la denrée alimentaire est passée dans la première section (2, 7),
- le mécanisme de fermeture (4) est fermé,
- le sac (1) est courbé, plié ou enroulé,
- le mécanisme de fermeture (4) est ouvert,
- le sac (1) est rempli d'eau,
- le mécanisme de fermeture (4) est fermé,
- le sac (1) est stocké avec la denrée alimentaire à la température spécifiée
- le sac (1) est stocké jusqu'à ce que le temps minimum soit atteint.

2. Utilisation d'un sac (1) selon la revendication 1, dans laquelle un temps maximum pour le trempage et le ramollissement sur la base de l'expiration de la denrée alimentaire est spécifié sur le sac (1) ou un autre emballage.
